# EUROPÄISCHE PATENTSCHRIFT

(11) **EP 0 943 060 B1**
(45) Veröffentlichungstag und Bekanntmachung des Hinweises auf die Patenterteilung: **07.08.2002**
(21) Anmeldenummer: 98952655.3
(22) Anmeldetag: 28.09.1998
(51) Int. Cl.: F16D 65/12, B60T 17/22

(54) **WERKZEUG ZUM BRECHEN VON BREMSSCHEIBEN UND VERFAHREN ZUM AUSWECHELN VON BREMSSCHEIBEN**
TOOL FOR BREAKING BRAKE DISKS AND METHOD FOR REPLACING A BRAKE DISK
OUTIL POUR ROMPRE DES DISQUES DE FREIN ET PROCEDE POUR REMPLACER UN DISQUE DE FREIN

(30) Priorität: 13.10.1997 DE 19745241
(43) Veröffentlichungstag der Anmeldung: 22.09.1999
(73) Patentinhaber: KNORR-BREMSE Systeme für Nutzfahrzeuge GmbH, 80809 München (DE)
(72) Erfinder: WERTH, Michael, D-85716 Unterschleissheim (DE); BIEKER, Dieter, D-83080 Oberaudorf (DE)
(86) Internationale Anmeldenummer: EP9806156
(87) Internationale Veröffentlichungsnummer: WO9919641

(56) Entgegenhaltungen:
- DE-A- 3 701 012
- DE-A- 4 303 418

## Beschreibung

Die Erfindung bezieht sich auf ein Verfahren zum Brechen einer ungebrochenen Bremsscheibe einer Scheibenbremse in montiertem Zustand gemäß dem Oberbegriff des Anspruches 1, einem Verfahren zum Auswechseln einer Bremsscheibe einer Scheibenbremse in ungebrochenem Zustand gemäß dem Oberbegriff von Anspruch 6 sowie einer Brechvorrichtung zum Brechen einer ungebrochenen Scheibenbremse gemäß dem Oberbegriff des Anspruches 7.

Scheibenbremsen finden heute insbesondere vermehrt im Nutzfahrzeugbereich, in dem es darauf ankommt, Bremsen für höchste Belastungen zur Verfügung zu stellen, Anwendung. Während einer Bremsung wird bei Scheibenbremsen über den Belagträger auf dem darauf befestigten Bremsbelagmaterial eine Zuspannkraft weitergeleitet, aus welcher die Bremskraft zwischen Belagmaterial bzw. Bremsbelag und Bremsscheibe resultiert. Betreffend die unterschiedlichen Ausbildungen von Scheibenbremsen wird auf die nachfolgende Literatur verwiesen:
- Prof. Dr.-Ing. Buschmann, Prof. Dr.-Ing. Koessler "Handbuch der Kraftfahrzeugtechnik", München 1976, Seiten 844 - 847
- P. Gerigk, D. Bruhn, D. Danner, L. Endruschat, J. Göbert, H. Gross, D. Komoll "Kraftfahrzeugtechnik", Braunschweig 1994, Seiten 425 - 427
- Deutsche Patentanmeldung DE 42 30 005
- Reparaturanleitung RA-SB 0002 "Pneumatische Scheibenbremse SB6 ... /SB7 ... (Standard und Radialbremse), Knorr-Bremse, System für Nutzfahrzeuge GmbH, 6.1997

Ein Verfahren zum Herstellen einer Bremsscheibe für eine Scheibenbremse ist aus der DE 43 03 418 bekannt geworden. Bei dem Verfahren gemäß DE 43 03 418 werden bei einer einstückigen, ringscheibenförmigen Bremsscheibe zwei Trennzonen vorgesehen, welche die Bremsscheibe in zwei Teile unterteilen. Anschließend wird in jeder Trennzone eine diese übergreifende Befestigungsvorrichtung ausgebildet. Schließlich wird die Bremsscheibe in den Trennzonen in die zwei Teile auseinandergebrochen. Hierdurch wird eine einfacher zu montierende und auszuwechselnde Bremsscheibe geschaffen.

Eine axial geteilte Bremsscheibe ist aus der DE 37 01 012 bekannt geworden.

Neben den Bremsbelägen unterliegen selbstverständlich auch die Bremsscheiben einem gewissen Verschleiß, beispielsweise durch Abrieb oder aber auch Temperaturschwankungen, die zu Rissen in der Bremsscheibe führen können. Wird ein derartiger Verschleiß festgestellt bzw. das Verschleißmaß erreicht, so müssen die Bremsscheiben ausgetauscht werden.

Ist die Bremsscheibe einteilig als ungebrochene Scheibe ausgeführt, so erfordert ein Tausch einer derartigen Scheibe insbesondere bei einem Nutzfahrzeug aufwendige Demontagearbeiten. Beispielsweise ist oftmals die komplette Nabe aufwendig zu zerlegen, um die verschlissene Bremsscheibe auswechseln zu können.

Andererseits ist die Erstausrüstung von Nutzfahrzeugen mit gebrochenen, d. h. mehrteiligen Bremsscheiben teurer.

Es ist somit Aufgabe der Erfindung, ein Verfahren und eine Vorrichtung anzugeben, mit dem bzw. mit der die zuvor aufgezeigten Nachteile des Standes der Technik überwunden werden können.

Erfindungsgemäß wird dieses Problem dadurch gelöst, daß ein Verfahren zum Brechen einer ungebrochenen Bremsscheibe einer Scheibenbremse in montiertem Zustand mit den nachfolgenden Schritten zur Verfügung gestellt wird:
- es wird an der Bremsscheibe eine Brechvorrichtung angesetzt,
- auf die Brechvorrichtung wird mittels einer Druckvorrichtung eine Kraft ausgeübt, und zwar derart, daß
- eine Querkraft bzw. ein Biegemoment in die Bremsscheibe eingebracht wird, die zum Bruch der Bremsscheibe vorzugsweise mit radial verlaufenden Bruchflächen führt.

In einer ersten Ausführungsform des erfindungsgemäßen Verfahrens ist vorgesehen, die Brechvorrichtung als separates Werkzeug auszubilden. Dieses separate Werkzeug wird entfernt vom Bremssattel der Scheibenbremse an der Bremsscheibe selbst angesetzt.

In einer besonders vorteilhaften Ausführungsform ist vorgesehen, daß die Brecheinrichtung mindestens zwei Brecheisen umfaßt, wobei die Brecheisen in ihrer äußeren Kontur Bremsbelägen ähnlich sind, so daß sie in den Belagschacht der Scheibenbremse eingesetzt werden können, vorzugsweise anstelle der Bremsbeläge. In einer weitergebildeten Ausführungsform der Erfindung ist vorgesehen, daß die Querkraft gemäß dem erfindungsgemäßen Verfahren direkt über die Bremskolben der Scheibenbremse eingebracht werden. Hierbei wird vorteilhafterweise der Bremskolben der Scheibenbremse pneumatisch oder hydraulisch durch die Fußbremse des Fahrzeuges betätigt.

Das zuvor beschriebene Verfahren betreffend das Brechen einer ungebrochenen Bremsscheibe einer Scheibenbremse wird bevorzugt dann eingesetzt, wenn eine Bremsscheibe einer Scheibenbremse in montiertem Zustand gewechselt werden soll. Ein Verfahren zum Wechseln einer Bremsscheibe im montierten Zustand zeichnet sich gemäß der Erfindung dadurch aus, daß zunächst die Bremsscheibe gemäß einem der vorgenannten Verfahren mit einer Brechvorrichtung gebrochen wird, wobei sich radial verlaufende Bruchflächen herausbilden. Die sich durch die Brechung ergebenden Bruchstücke der Bremsscheibe werden anschließend in radialer Richtung aus der Bremszange herausgenommen, wobei eine Demontage von Achsoder Bremsteilen nicht erforderlich ist.

Nachdem die alte Bremsscheibe auf diesem Weg aus der Bremsvorrichtung herausgelöst wurde, wird eine neue, mehrteilige Bremsscheibe eingebaut, wobei die mehrteilige Bremsscheibe sich aus mindestens zwei Ringstücken zusammensetzt, die beispielsweise mittels einer Bolzenverbindung miteinander verbunden werden. Selbstverständlich sind auch andere Verbindungsarten in diesem Zusammenhang denkbar.

Neben dem oben genannten Brechverfahren bzw. dem oben genannten Verfahren zum Auswechseln einer Bremsscheibe in montiertem Zustand stellt die Erfindung auch eine Brechvorrichtung zum Brechen einer ungebrochenen Bremsscheibe in montiertem Zustand zur Verfügung. Erfindungsgemäß ist diese Brechvorrichtung dadurch gekennzeichnet, daß sie Brech- bzw. Trenneisen umfaßt, die auf die Bremsscheibe aufgesetzt werden können, die einander gegenüberliegend in die Belagschächte der Scheibenbremse einsetzbar ist. Bevorzugt weisen die Brech- und Trenneisen Brechstege auf. Besonders bevorzugt ist es, wenn die Brech- bzw. Trenneisen in ihrer äußeren Kontur Bremsbelägen ähnlich sind. In einer derartigen Ausführungsform können die Brech- bzw. Trenneisen anstelle von Bremsbelägen oder zusammen mit diesen in den Belagschacht eingesetzt werden. Die entsprechend geformten Brech- bzw. Trenneisen liegen in den Belagschächten der Scheibenbremsen einander gegenüber und weisen zueinander in Umfangsrichtung versetzte Brechstege auf. In einer besonderen Ausführungsform ist vorgesehen, daß einer der Trenneisen Brechstege in der Nähe der beiden äußeren Enden des Brechbzw. Trenneisens aufweist, wohingegen das andere Brecheisen, das dem vorgenannten gegenüberliegt, einen einzigen Brechsteg aufweist, der mittig angeordnet ist. Durch eine derartige Anordnung der Brechstege an den Brech- bzw. Trenneisen ist es möglich, über die Bremskolben der Scheibenbremse mit den in die Bremse eingelegten Brech- bzw. Trenneisen hohe Querkräfte bzw. ein hohes Biegemoment in die Bremsscheibe einzubringen, so daß hierdurch ein Bruch der Bremsscheibe mit im wesentlichen in radialer Richtung verlaufenden Bruchflächen erhalten wird.

Die Erfindung soll nunmehr anhand der nachfolgenden Ausführungsbeispiele beschrieben werden.

Es zeigen:
- Fig. 1: Draufsicht auf eine montierte Sattelbremse mit ausgebauter Brechvorrichtung;
- Fig. 2 und 3: Draufsicht auf eine Sattelbremse mit eingebauter Brechvorrichtung.

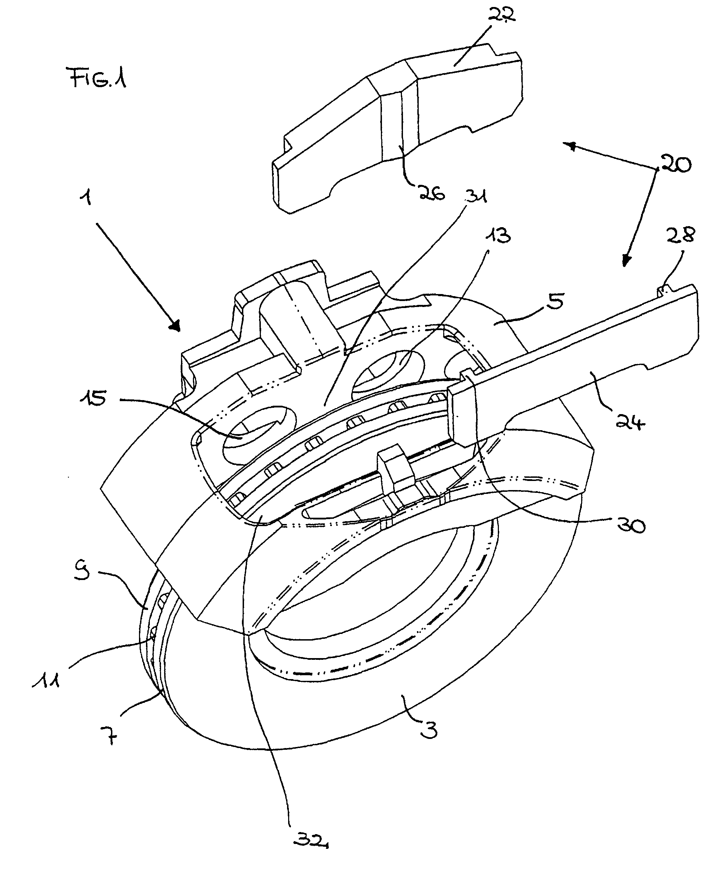

In Fig. 1 ist in einer Draufsicht eine Scheibenbremse 1 umfassend eine Bremsscheibe 3 sowie einen Bremssattel 5 dargestellt. Bei der gezeigten Sattelbremse handelt es sich um eine sogenannte Schwingsattelbremse, ohne daß hierin eine Beschränkung der Erfindung zu sehen wäre. Die Schwingsattelbremse umfaßt im Gegensatz beispielsweise zur Festsattelbremse nur einseitig Zylinder mit Kolben. Der Schwingsattel ist seitlich verschiebbar auf einem Halter, der fest in der Radaufhängung verschraubt ist, gelagert. Er überträgt die Spannkräfte der Kolben auf den gegenüberliegenden Bremsbelag. Eine derartige Schwingsattelbremse, wie sie insbesondere bei Nutzfahrzeugen Anwendung findet, ist in der Reparaturanleitung RA-SG0002, Pneumatische Scheibenbremse SB6../SB7.. (Standard- und Radialbremse), Knorr-Bremse, 0.6.97, eingehend beschrieben.

Die Bremsscheibe weist zwischen den Reibringen 7, 9 Kühlrippen 11 auf, ohne daß hierin eine Beschränkung der Erfindung auf derartige Bremsscheiben zu sehen wäre. Selbstverständlich sind auch massive Scheiben einsetzbar. Im Bremssattel selbst sind Aussparungen 13, 5 für die Bremskolben der Scheibenbremse vorgesehen.

Das erfindungsgemäße Brechwerkzeug 20 setzt sich in dem vorliegenden Ausführungsbeispiel aus zwei Brecheisen 22, 24 zusammen. Das Brechwerkzeug 20 ist in Fig. 1 in ausgebauter Form dargestellt. Brecheisen 22 verfügt über einen im wesentlichen mittig angeordneten Brechsteg 26, wohingegen Brecheisen 24 zwei im wesentlichen an den Enden des Trennwerkzeuges angeordnete Brechstege 28, 30 umfaßt.

Die beiden Brecheisen 22, 24 sind in der vorliegenden Ausführungsform derart ausgebildet, daß sie in ihren äußeren Abmessungen im wesentlichen einem Bremsbelag entsprechen.

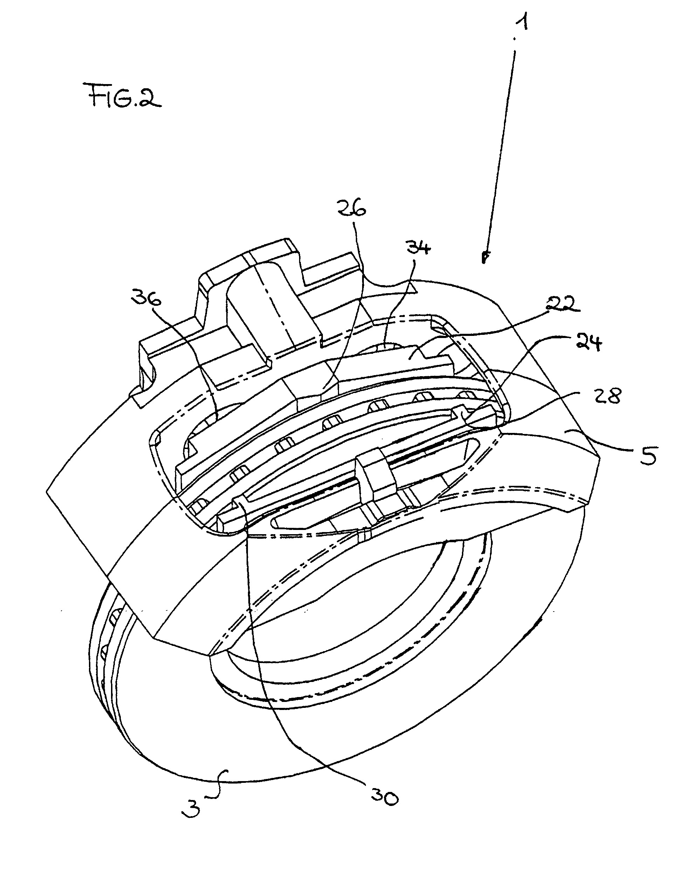

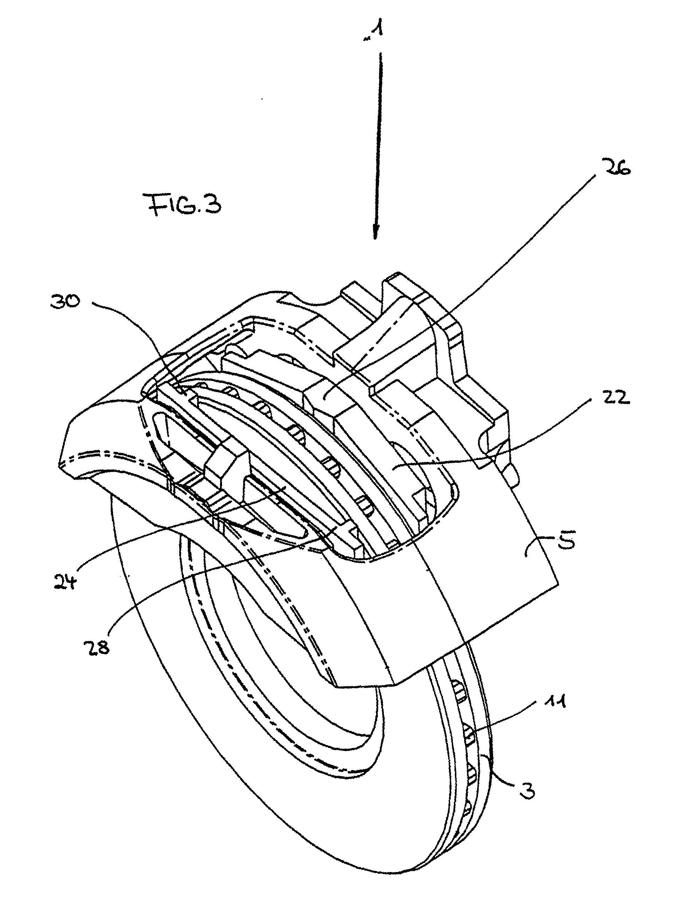

Die dargestellte Ausführungsform des Brechwerkzeuges mit zwei Brecheisen 22, 24 in Form von Bremsbelägen eröffnet die einfache Möglichkeit, die Brech- bzw. Trenneisen in die Belagschächte 31, 32 der Scheibenbremse anstelle der Bremsbeläge wie in Fig. 2 dargestellt einzusetzen. Um die Bremsscheibe in montiertem Zustand wie dargestellt zu brechen, werden nach Einsetzen der Trennscheiben 22, 24 in die Belagschächte 31, 32 die Bremskolben 34, 36 betätigt. Eine Betätigung der Bremskolben kann entweder pneumatisch oder hydraulisch erfolgen durch einfaches Niederdrücken der Fußbremse des Fahrzeuges. Mit Hilfe der Kolben 34, 36 wird zunächst die Trennscheibe 22 an die Bremsscheibe 3 gepreßt. Über die Reaktionskraft und den Bremssattel wird, nachdem die Trennscheibe 22 mit der Bremsschreibe 3 zur Anlage kommt, auch die Trennscheibe 24 gegen die Bremsscheibe 3 gedrückt. Durch die in Umfangsrichtung voneinander versetzt angeordneten Brechstege 26, 28, 30 der einander gegenüberliegenden Trennscheiben wird über die Bremskolben 34, 36 eine hohe Querkraft bzw. ein hohes Biegemoment in die Bremsscheibe eingebracht, wodurch diese bricht. Hierbei bilden sich radial verlaufende Bruchflächen aus. Die einzelnen Bruchstücke können dann in radialer Richtung aus dem Bremssattel bzw. der Bremszange herausgezogen werden. Nachdem die gebrochene Bremsscheibe auf diese Art und Weise ausgebaut wurde, ist es möglich, eine neue, gebrochene d.h. mehrteilige Bremsscheibe in die Scheibenbremse 1 einzusetzen. In Fig. 3 ist eine weitere Darstellung einer Draufsicht auf eine Sattelbremse mit eingebauter Trennvorrichtung aus anderer Perspektive wie in Fig. 2 dargestellt. Sämtliche Bauteile bzw. Einzelteile, die mit denen der Fig. 1 und 2 übereinstimmen, sind mit den gleichen Bezugsziffern belegt.

Selbstverständlich wäre es möglich, das Brechwerkzeug als separates Werkzeug auszubilden. Ein separates Werkzeug umfaßt mindestens zwei einander gegenüberliegende Brech- bzw. Trenneisen. Eine derartige Vorrichtung ist zum Brechen der Bremsscheibe beabstandet zum Bremssattel angeordnet und weist einen eigenen Rahmen sowie eine eigene Vorrichtung zum Betätigen der Trenneisen auf. Die Trenneisen selbst umfassen Brechstege, die für einander gegenüberliegende Trenneisen versetzt angeordnet sind.

Die vorliegende Erfindung stellt erstmals eine Vorrichtung bzw. ein Verfahren zum Brechen einer Bremsscheibe, insbesondere einer Plansitzscheibe oder halslosen Scheibe, einer Scheibenbremse in montiertem Zustand zur Verfügung. In einer besonders bevorzugten Ausführungsform ist vorgesehen, das Trennwerkzeug mit Hilfe von zwei Trenneisen auszubilden, die in die Belagschächte des Bremsbelages einsetzbar sind, wobei die Trennkraft bei dieser Ausführungsform durch die Bremskolben selbst und damit die Bremsvorrichtung intern aufgebracht wird, was erhebliche Kostenvorteile hat.

Die erfindungsgemäße Brechvorrichtung erlaubt die Verwendung von ungebrochenen Bremsscheiben bei der Erstausrüstung, was erhebliche Kostenvorteile hat. Eine völlige Demontage von Nabe und anderen Bauteilen insbesondere bei einer Verwendung in Nutzfahrzeugen, um die verschlissene Bremsscheibe auswechseln zu können, ist mit der erfindungsgemäßen Brechvorrichtung nicht mehr erforderlich.

## Patentansprüche

1. Verfahren zur Demontage einer ungebrochenen Bremsscheibe (3) einer Scheibenbremse (1) in montiertem Zustand mit folgenden Schritten:
1.1 es wird an der Bremsscheibe (3) eine Brechvorrichtung angesetzt;
1.2 auf die Brechvorrichtung wird mittels einer Druckvorrichtung eine Kraft ausgeübt, derart, daß
1.3 eine Querkraft bzw. ein Biegemoment in die Bremsscheibe (3) eingebracht wird, die zum Bruch der Bremsscheibe (3) vorzugsweise mit radial verlaufenden Bruchflächen führt.

2. Verfahren nach Anspruch 1, **dadurch gekennzeichnet, daß** die Brechvorrichtung als separates Werkzeug ausgebildet ist, das entfernt vom Bremssattel der Scheibenbremse an der Bremsscheibe angesetzt wird.

3. Verfahren nach Anspruch 1, **dadurch gekennzeichnet, daß** die Brechvorrichtung mindestens zwei Brecheisen (22, 24) umfaßt, die in ihrer äußeren Kontur Bremsbelägen ähnlich ausgebildet sind und die in den Belagschacht (31, 32) der Scheibenbremse eingesetzt werden.

4. Verfahren nach Anspruch 3, **dadurch gekennzeichnet, daß** die Querkraft über den (die) Bremskolben (34, 36) der Scheibenbremse eingebracht wird.

5. Verfahren nach Anspruch 4, **dadurch gekennzeichnet, daß** der (die) Bremskolben (34, 36) der Scheibenbremse (1) pneumatisch oder hydraulisch durch die Fußbremse des Fahrzeuges betätigt wird.

6. Verfahren zum Auswechseln einer Bremsscheibe einer Scheibenbremse in ungebrochenem Zustand mit folgenden Schritten:
6.1 Brechen der Bremsscheibe (3) gemäß einem der Ansprüche 1 bis 5;
6.2 Herausnehmen der Bruchstücke in radialer Richtung aus der Bremszange ohne die Montage von Achs- oder Bremsteilen;
6.3 Einbau einer mehrteiligen neuen Bremsscheibe.

7. Brechvorrichtung zum Brechen einer ungebrochenen Bremsscheibe in montiertem Zustand; die Brechvorrichtung ist **dadurch gekennzeichnet, daß** sie auf die Bremsscheibe (3) aufsetzbare Brech- bzw. Trenneisen (22, 24) umfaßt, die einander gegenüber-liegend in die Belagschächte (31, 32) der Scheibenbremse einsetz-bar sind.

8. Brechvorrichtung nach Anspruch 7, **dadurch gekennzeichnet, daß** die Brech- bzw. Trenneisen (22, 24) Brechstege (26, 28, 30) aufweisen.

9. Brechvorrichtung nach Anspruch 7 oder 8, **dadurch gekennzeichnet, daß** die Brech- bzw. Trenneisen (22, 24) in ihrer äußeren Kontur derart Bremsbelägen ähnlich sind, daß sie in den Belagschacht einer Scheibenbremse einsetzbar sind.

10. Brechvorrichtung nach Anspruch 8, **dadurch gekennzeichnet, daß** die Brechstege (26, 28, 30) der gegenüberliegenden Brech- bzw. Trenneisen (22, 24) in Umfangsrichtung versetzt zueinander angeordnet sind.

## Claims

1. Method of demounting an unbroken brake disc (3) of a disc brake (1) in the fitted condition, the said method comprising the following steps:
1.1 a breaking device is placed on the brake disc (3);
1.2 a force is exerted on the breaking device by means of a pressing device in such a way that
1.3 a transverse force or bending moment is applied to the brake disc (3) and leads to the breaking of the said brake disc (3), preferably with radially. extending fractured surfaces.

2. Method according to claim 1, **characterised in that** the breaking device is constructed as a separate tool which is placed on the brake disc in a manner remote from the brake-caliper yoke of the disc brake.

3. Method according to claim 1, **characterised in that** the breaking device comprises at least two breaking irons (22, 24) which are of similar construction, in their outer contour, to brake linings and are inserted in the lining shaft (31, 32) of the disc brake.

4. Method according to claim 3, **characterised in that** the transverse force is applied via the brake piston(s) (34, 36) of the disc brake.

5. Method according to claim 4, **characterised in that** the brake piston(s) (34, 36) of the disc brake (1) is/are actuated pneumatically or hydraulically by the foot brake of the vehicle.

6. Method of changing a brake disc of a disc brake in the unbroken condition, the said method comprising the following steps:
6.1 breaking of the brake disc (3) in accordance with one of claims 1 to 5;
6.2 removal of the fragments from the brake caliper in the radial direction without the fitting (sic) of axle or brake parts;
6.3 installation of a new, multipart brake disc.

7. Breaking device for breaking an unbroken brake disc in the fitted condition; the said breaking device is **characterised in that** it comprises breaking or severing irons (22, 24) which can be put onto the brake disc (3) and can be inserted, in a mutually opposed manner, in the lining shafts (31, 32) of the disc brake.

8. Breaking device according to claim 7, **characterised in that** the breaking or severing irons (22, 24) have breaking webs (26, 28, 30).

9. Breaking device according to claim 7 or 8, **characterised in that** the breaking or severing irons (22, 24) are similar, in their outer contour, to brake linings in such a way that they can be inserted in the lining shaft of a disc brake.

10. Breaking device according to claim 8, **characterised in that** the breaking webs (26, 28, 30) of the opposed breaking or severing irons (22, 24) are disposed so as to be offset in relation to one another in the peripheral direction.

## Revendications

1. Procédé de démontage d'un disque (3) de frein en une pièce d'un frein (1) à disque monté sur un véhicule, comprenant les étapes suivantes :
1.1 un dispositif pour rompre le disque de frein est mis en place sur le disque (3) de frein ;
1.2 une force est exercée au moyen d'un dispositif de pression sur le dispositif pour rompre le disque de frein, de telle sorte que
1.3 il est appliqué au disque (3) de frein une force transversale ou un couple de flexion, qui provoque la rupture du disque (3) de frein de préférence avec des surfaces de rupture s'étendant radialement.

2. Procédé suivant la revendication 1, **caractérisé en ce que** le dispositif pour rompre le disque de frein est réalisé sous forme d'outil séparé; qui est mis en place sur le disque de frein à distance de l'étrier du frein à disque.

3. Procédé suivant la revendication 1, **caractérisé en ce que** le dispositif pour rompre le disque de frein comprend au moins deux pinces-leviers, qui sont réalisées en ayant un contour extérieur analogue à des garnitures de frein et qui sont insérées dans le puits (31, 32) de garniture du frein à disque.

4. Procédé suivant la revendication 3, **caractérisé en ce que** la force transversale est introduite par l'intermédiaire du ou des pistons (34, 36) de frein du frein à disque.

5. Procédé suivant la revendication 4, **caractérisé en ce que** le ou les pistons (34, 36) de frein du frein (1) à disque sont actionnés pneumatiquement ou hydrauliquement par la pédale de frein du véhicule.

6. Procédé de remplacement d'un disque de frein en une pièce d'un frein à disque, comprenant les étapes suivantes :
6.1 rupture du disque (3) de frein suivant l'une des revendications 1 à 5 ;
6.2 dépose des morceaux rompus en les sortant de l'étrier de frein en direction radiale, sans démontage d'éléments d'essieu ou de frein ;
6.3 installation d'un disque de frein neuf en plusieurs parties.

7. Dispositif pour rompre un disque de frein en une pièce monté sur un véhicule, **caractérisé en ce qu'**il comprend des pinces-leviers (22, 24) pouvant être posées sur le disque (3) de frein, qui peuvent être insérées, en se faisant face, dans les puits (31, 32) de garniture du frein à disque.

8. Dispositif pour rompre un disque de frein suivant la revendication 7, **caractérisé en ce que** les pinces-leviers (22, 24) possèdent des nervures (26, 28, 30) de rupture.

9. Dispositif pour rompre un disque de frein suivant la revendication 7 ou 8, **caractérisé en ce que** les pinces-leviers (22, 24) sont réalisées en ayant un contour extérieur analogue à des garnitures de frein, de sorte qu'elles peuvent être insérées dans le puits de garniture d'un frein à disque.

10. Dispositif pour rompre un disque de frein suivant la revendication 8, **caractérisé en ce que** les nervures (26, 28, 30) de rupture des pinces-leviers (22, 24) se faisant face sont disposées en étant mutuellement décalées en direction circonférentielle.
